(19) **Europäisches Patentamt / European Patent Office / Office européen des brevets**

(11) **EP 4 625 205 A1**

(12) **EUROPEAN PATENT APPLICATION**
published in accordance with Art. 153(4) EPC

(43) Date of publication:
01.10.2025 Bulletin 2025/40

(21) Application number: 23893170.3

(22) Date of filing: 30.06.2023

(51) International Patent Classification (IPC):
$G06F\ 16/51$ (2019.01)   $G06F\ 16/587$ (2019.01)
$G06F\ 16/29$ (2019.01)

(52) Cooperative Patent Classification (CPC):
G06F 3/06; G06F 16/29; G06F 16/51; G06F 16/587;
G06T 9/00

(86) International application number:
PCT/CN2023/104618

(87) International publication number:
WO 2024/109070 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 CN 202211494398

(71) Applicant: Zhejiang Uniview Technologies Co.,
Ltd.
Hangzhou, Zhejiang 310051 (CN)

(72) Inventors:
• ZHOU, Renyi
  Hangzhou, Zhejiang 310051 (CN)
• LI, Gang
  Hangzhou, Zhejiang 310051 (CN)
• WANG, Fenglei
  Hangzhou, Zhejiang 310051 (CN)

(74) Representative: De Ros, Alberto
Società Italiana Brevetti S.p.A.
Via G. Carducci 8
20123 Milano (IT)

(54) **TILE MAP PROCESSING METHOD AND APPARATUS, ELECTRONIC DEVICE AND STORAGE MEDIUM**

(57) The present disclosure relates to the technical field of maps, and provides a tile map processing method and apparatus, an electronic device and a storage medium. The method comprises: for each level of a tile map, acquiring marker clustering data and tile serial number distribution information of the level; determining the serial number of a map tile where the marker clustering data is located, and generating a clustering data distribution diagram according to the serial number and the tile serial number distribution information, the clustering data distribution diagram representing the distribution of the marker clustering data in the map tile of the level; determining a compression weight of each map tile in the level on the basis of the clustering data distribution diagram; and on the basis of the compression weight, compressing the map tile corresponding to the compression weight to obtain a tile compressed map after tile map compression.

FIG. 1

Obtaining, for each level of a tile map, point aggregation data and tile serial number distribution information of the level — 110

Determining a sequence number of a map tile where the point aggregation data are located, and generating an aggregation data distribution graph based on the sequence number and the tile serial number distribution information — 120

Determining a compression weight of each map tile of the level based on the aggregation data distribution graph — 130

Compressing a map tile corresponding to the compression weight based on the compression weight, to obtain a compressed tile map of the tile map — 140

**Description**

CROSS-REFERENCES TO RELATED APPLICATIONS

The present application claims priority to Chinese Patent Application No. 202211494398.X filed on November 25, 2022, entitled "Tile Map Processing Method and Apparatus, Electronic Device and Storage Medium", which is hereby incorporated by reference in its entirety.

FIELD

The present application relates to the field of map technologies, and in particular, to a method and an apparatus for tile map processing, an electronic device, and a storage medium.

BACKGROUND

Tile map is made by segmenting map images at each zoom level into individual map tiles, which are then assembled into rows and columns in a certain organized form. For example, a tile map pyramid model may be formed, which is a multi-resolution hierarchical model where the resolution decreases from the bottom to the top of the tile pyramid, but the geographical region represented remains unchanged.

As a type of network maps, tile maps require a certain amount of network transmission bandwidth during loading and display, especially when a large number of client devices perform network requests to display maps, the pressure on network transmission bandwidth is very high. In view of the above, the original drawing data of standard map tiles may be processed into vector tiles and index information, and the required vector tiles may be obtained through the index information. Then, vector data analysis and image drawing may be performed, and the pressure on network transmission bandwidth may be reduced by recording only vector information.

BRIEF SUMMARY

The present application provides a method and an apparatus for tile map processing, an electronic device, and a storage medium, to solve a problem of limited applicability of tile map processing in the related art, while reducing the network transmission bandwidth pressure during tile map display and improving the applicability of tile map processing.

The present application provides a method for tile map processing, including:

obtaining, for each level of a tile map, point aggregation data and tile serial number distribution information of the level;

determining a sequence number of a map tile where the point aggregation data are located, and generating an aggregation data distribution graph based on the tile serial number distribution information and the sequence number, where the aggregation data distribution graph represents distribution of the point aggregation data in a map tile of the level;

determining a compression weight of each map tile of the level based on the aggregation data distribution graph; and

compressing a map tile corresponding to the compression weight based on the compression weight, to obtain a compressed tile map of the tile map.

The present application further provides an apparatus for tile map processing, including:

an obtaining module, configured to obtain, for each level of a tile map, point aggregation data and tile serial number distribution information of the level;

a processing module, configured to determine a sequence number of a map tile where the point aggregation data are located, and generate an aggregation data distribution graph based on the tile serial number distribution information and the sequence number, where the aggregation data distribution graph represents distribution of the point aggregation data in a map tile of the level;

a determining module, configured to determine a compression weight of each map tile of the level based on the aggregation data distribution graph; and

a compressing module, configured to compress a map tile corresponding to the compression weight based on the compression weight, to obtain a compressed tile map of the tile map.

The present application further provides an electronic device, including a memory, a processor, and a computer program stored on the memory and executable on the processor. When executing the computer program, the processor performs any of the methods for tile map processing described above.

The present application further provides a non-transient computer-readable storage medium on which a computer program is stored. When executed by a processor, the computer program performs any of the methods for tile map processing described above.

The present application further provides a computer program product including a computer program. When executed by a processor, the computer program performs any of the methods for tile map processing described above.

BRIEF DESCRIPTION OF THE DRAWINGS

FIG. 1 is first schematic flowchart of a method for tile map processing according to an embodiment of the present application;

FIG. 2 is a schematic effect diagram of level point aggregation according to an embodiment of the present application;

FIG. 3 is a schematic distribution diagram of serial numbers of map tiles according to an embodiment of the present application;

FIG. 4 is a schematic distribution diagram of aggregation data according to an embodiment of the present application;

FIG. 5 is a schematic distribution diagram of numerical smoothing according to an embodiment of the present application;

FIG. 6 is a schematic diagram of a compression weight curve according to an embodiment of the present application;

FIG. 7 is a schematic distribution diagram of compression weights of map tiles according to an embodiment of the present application;

FIG. 8 is a second schematic flowchart of a method for tile map processing according to an embodiment of the present application;

FIG. 9 is a schematic diagram of a map movement direction coordinate system according to an embodiment of the present application;

FIG. 10 is a schematic diagram of browsing trajectories corresponding to map browsing operations in a same level according to an embodiment of the present application;

FIG. 11 is a schematic structural diagram of an apparatus for tile map processing according to an embodiment of the present application; and

FIG. 12 is a schematic structural diagram of an electronic device according to an embodiment of the present application.

DETAILED DESCRIPTION

Solutions in the present application are described below in conjunction with the accompanying drawings. The described embodiments are a part of the embodiments of the present application, not all of them.

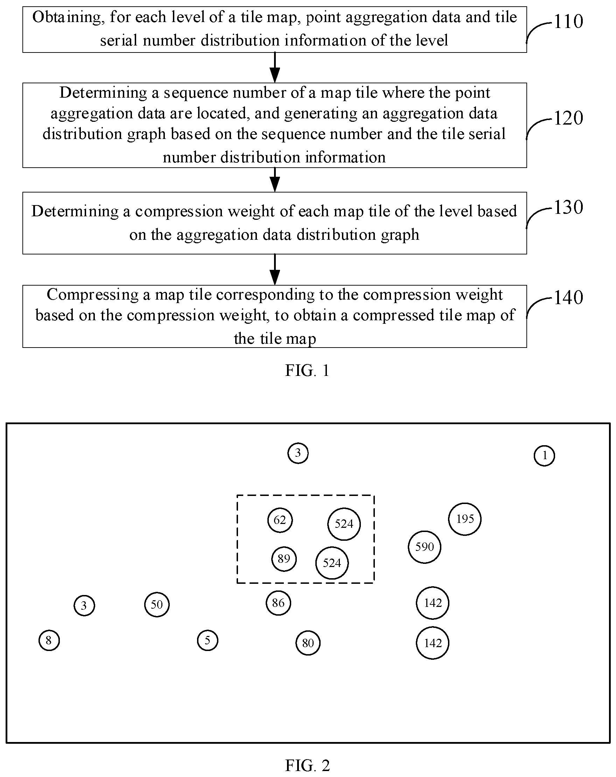

The method for tile map processing in the present application is described below in conjunction with FIG. 1 - FIG.10. The method for tile map processing may be performed by an electronic device such as a server, a mobile phone, and a computer, as well as an apparatus for tile map processing provided in the server, the mobile phone, and the computer. The apparatus for tile map processing may be implemented through software, hardware, or a combination thereof.

FIG. 1 exemplarily illustrates a first schematic flowchart of a method for tile map processing according to an embodiment of the present application. Referring to FIG. 1, the method for tile map processing may include the following step 110 to step 140.

Step 110: obtaining, for each level of a tile map, point aggregation data and tile serial number distribution information of the level.

A tile map, such as a pyramid tile map, may include at least two levels of map images, each with a different zoom ratio but representing the same geographical region. For each level, map images of that level may be segmented to form a plurality of map tiles, and each map tile has its corresponding tile serial number.

FIG. 2 exemplarily illustrates a schematic effect diagram of level point aggregation according to an embodiment of the present application. Referring to FIG. 2, taking one level of a tile map for example, the points in the map image of that level may be aggregated through an aggregation algorithm to obtain the point aggregation data shown in the circle in FIG. 2. The point aggregation data may include a number of points and an aggregation position. A position where the circle is located represents the aggregation position, and data inside the circle represents the number of points aggregated to that aggregation position. For example, the aggregation data at this point may be represented in the form of a cubic matrix, such as the following matrix M.

$$M = \begin{bmatrix} (\text{lng, lat, number}) & \cdots & (\text{lng, lat, number}) \\ \vdots & \ddots & \vdots \\ (\text{lng, lat, number}) & \cdots & (\text{lng, lat, number}) \end{bmatrix},$$

where lng represents longitude, lat represents latitude, and number represents the number of points. In an embodiment, each level has its corresponding matrix M.

For example, the aggregation algorithm may include a grid aggregation algorithm, which may group and aggregate irregular spatial distribution points on a map based on partitioned grids.

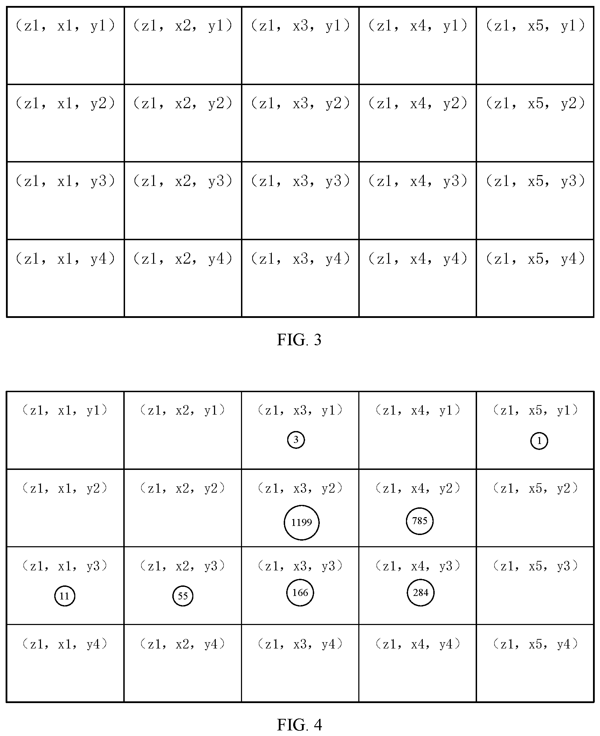

The tile serial number distribution information in a level may represent the distribution of each map tile in the map image of that level after being divided into map tiles. For example, taking the level shown in FIG. 2 for example, based on the segmentation information of the map image at that level, the serial number distribution information of the map tiles segmented at that level may be determined, that is, the serial number distribution information of the tiles at that level may be obtained. The segmentation information may include a tile size, a segmentation origin, a resolution, and a projection coordinate system, etc. The projection coordinate system may be, for example, the Mercator projection coordinate system. FIG. 3 exemplarily illustrates a schematic distribution diagram of serial numbers of map tiles according to an embodiment of the present application. Referring to FIG. 3, the map image at the level shown in FIG. 2 may be segmented into 20 map tiles of $4 \times 5$. The tile coordinate shown in each map tile represent the serial number of that tile, where z represents a level, x represents a tile longitude coordinate, and y represents a tile latitude coordinate.

Step 120: determining a sequence number of a map tile where the point aggregation data are located, and generating an aggregation data distribution graph based on the sequence number and the tile serial number distribution information.

The aggregation data distribution graph represents the distribution of point aggregation data in the map tiles of the level.

Taking FIG. 2 and FIG. 3 for example, based on the aggregation result matrix M of the level point aggregation data shown in FIG. 2, the following formulas (1) and (2) may be used to determine the sequence number [z, tileX, tileY] of the map tile where the point aggregation data are located in FIG. 3:

$$\text{tileX} = \frac{lng + 180}{360} \times 2^z \qquad (1);$$

$$\text{tileY} = \left[1 - \frac{ln \left(\tan\left(\text{lat} \times \frac{\pi}{180}\right) + \frac{1}{cos\left(\text{lat} \times \frac{\pi}{180}\right)}\right)}{\pi}\right] \times 2^{z-1} \qquad (2),$$

where z represents the level, tileX represents the tile longitude coordinate of the map tile where the point aggregation data are located, and tileY represents the tile latitude coordinate of the map tile where the point aggregation data are located.

After determining the sequence number of the map tile where the point aggregation data are located, the point aggregation data corresponding to the same sequence number may be stacked to obtain the point aggregation data in each map tile corresponding to the sequence number. Combined with the tile serial number distribution information, the stacked result may be converted into the corresponding map tile to form an aggregation data distribution graph. For example, in combination with FIG. 2 and FIG. 3, it is equivalent to stack FIG. 2 and FIG. 3 and the point aggregation data of FIG. 2 are converted into the map tile shown in FIG. 3. Correspondingly, FIG. 4 exemplarily illustrates a schematic distribution diagram of aggregation data according to an embodiment of the present application. Referring to FIG. 4, taking the four-point aggregation data within a dashed box in FIG. 2 as an example, using formulas (1) and (2) above, it may be calculated that all four-point aggregation data within the dashed box fall on the map tile with a serial number (z1, x3, y2) in FIG. 3. Therefore, by stacking the four-point aggregation data together, point aggregation data with a number of points of 1199 on the map tile as shown in FIG. 4 may be obtained. By performing the same processing on all the point aggregation data in FIG. 2, the aggregation data distribution graph shown in FIG. 4 may be obtained.

Step 130: determining a compression weight of each map tile of the level based on the aggregation data distribution graph.

The aggregation data distribution graph may represent the distribution of point aggregation data in map tiles of a corresponding level, and the compression weight of the corresponding map tile may be determined based on the point aggregation data in each map tile.

In an embodiment, for map tiles of each level, compression weights may be set based on the number of points in the aggregation data in the map tiles of that level, such as assigning high compression weights to map tiles with a large number of points, and assigning low compression weights to map tiles with a small number of points. For example, taking FIG. 4 as an example, the point aggregation data may be sorted based on a size of the number of points. A maximum number of points is 1199 and a minimum number of points is 1. A compression weight range Pmax - Pmin is set. The compression weight of the map tile corresponding to the maximum number of points 1199 is determined as Pmax, and the compression weight of the map tile corresponding to the minimum number of points 1 is determined as Pmin. The compression weight of the map tile corresponding to the number of other points between 1199 and 1 may be determined between Pmax and Pmin. For example, the compression weight may be determined based on a given functional relationship between the number of points and the compression weight, which may include a proportional function or a normal distribution function.

In an embodiment, for map tiles of each level, the point aggregation data corresponding to each map tile in the aggregation data distribution graph of that level may be first diffused to adjacent map tiles, such as by smoothing the number of points. Then, the compression weight of each map tile may be determined based on the diffused distribution graph. In this way, the determined compression weight would not have a significant change between two adjacent tiles, ensuring visual coherence. In an embodiment, determining the compression weight of each map tile of the level based on the aggregation data distribution graph may include: performing numerical smoothing processing on the aggregation data distribution graph based on the number of points, to obtain a numerically smoothed distribution graph; and performing normalization processing on the numerically smoothed distribution graph, to obtain a weight distribution graph corresponding to a corresponding level. The weight distribution graph may reflect the compression weight of each map tile in the corresponding level. The smoothing processing may include, for example, Gaussian blur processing; the normalization processing may be, for example, normalization processing based on normal distribution.

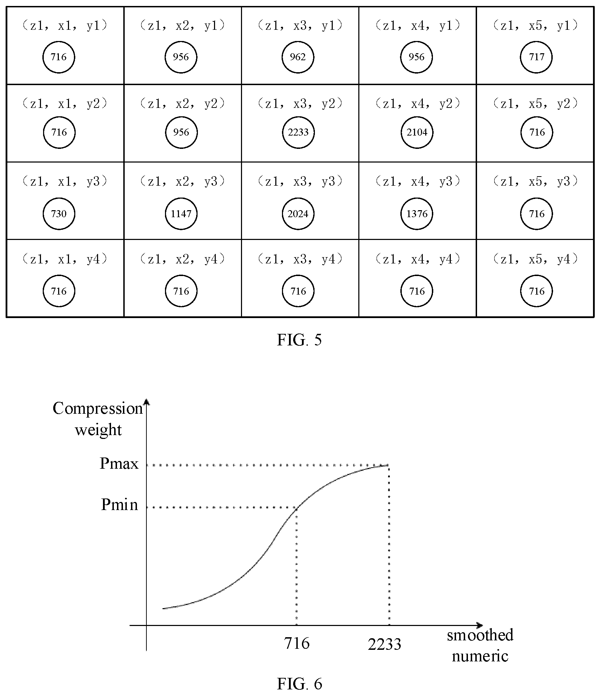

For example, taking the aggregation data distribution graph in FIG. 4 for example, after performing Gaussian blur to numerically smooth the number of points on the aggregation data distribution graph, a numerically smoothed distribution graph may be obtained. FIG. 5 exemplarily illustrates a schematic distribution diagram of numerical smoothing according to an embodiment of the present application. Referring to FIG. 5, a value in each map tile (the value in a circle) is a value obtained by smoothing the number of points. It may be seen that after numerical smoothing, the values of adjacent map tiles may smoothly transition.

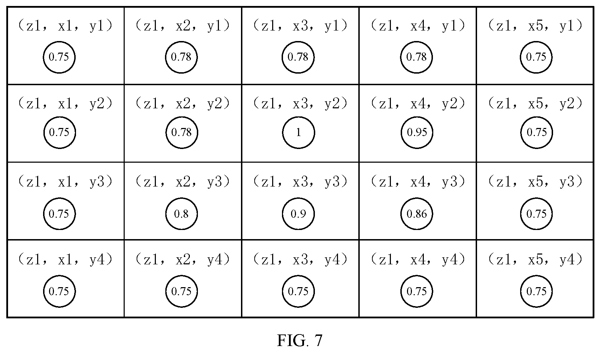

FIG. 6 exemplarily illustrates a schematic diagram of a compression weight curve according to an embodiment of the present application. Referring to FIG. 5 and FIG. 6, the maximum value 2233 in the numerically smoothed distribution graph may correspond to the maximum compression weight Pmax, and the minimum non-zero value 716 in the numerically smoothed distribution graph may correspond to the minimum compression weight Pmin. Pmax may be used as a vertex of a normal distribution, and Pmin may be used as a threshold for m% of the normal distribution. For example, if Pmax may be taken as 1, then Pmin may be m% × Pmax; then, the compression weight corresponding to each value shown in FIG. 5 may be obtained based on the compression weight curve shown in FIG. 6, that is, the compression weight of each map tile in the corresponding level of FIG. 5 may be obtained. For example, FIG. 7 exemplarily illustrates a schematic distribution diagram of compression weights of map tiles according to an embodiment of the present application. Referring to FIG. 7, the values inside the circles represent compression weights, and each map tile has its corresponding compression weight. The compression weights between two map tiles transition smoothly. After compressing each map tile using its compression weight, the resulting compressed tile may be visually coherent when displayed.

Step 140: compressing a map tile corresponding to the compression weight based on the compression weight, to obtain a compressed tile map of the tile map.

For map tiles of each level, after obtaining the compression weight of each map tile at that level, the compression weight of each map tile may be used to compress the map tile, such as lossy compression, which may reduce the data volume of the map tile. In this way, when loading and displaying a tile map composed of map tiles, the load on network transmission bandwidth may be effectively reduced. If each level of the tile map is processed as in step 110 to step 140, the compressed tile map of the tile map may be obtained.

For example, compressing a map tile corresponding to the compression weight based on the compression weight may include: determining a compression quality factor based on the compression weight; and performing lossy compression on the map tile corresponding to the compression weight based on the compression quality factor.

For lossy compression, the compression intensity may be controlled by the quality factor. For example, the higher the quality factor, the closer the compressed image quality is to the precompression image quality, that is, the clearer the image; correspondingly, the lower the quality factor, the higher the degree of compression, the smaller the amount of compressed image data, and the lower the image clarity. For example, a minimum quality factor may be set based on a type of lossy compression algorithm, and then the compression weight obtained in step 130 may correspond to the quality factor. For example, a functional relationship may be established between compression weight and quality factor, in which the maximum compression weight Pmax corresponds to the maximum quality factor Qmax, and the minimum compression weight Pmin corresponds to the minimum quality factor Qmin. The function relationship may be, for example, a proportional function.

In this way, by using the compression weight determined based on the distribution of map tiles to set the quality factor for lossy compression, it is possible to compress images with loss without affecting the experience of users.

In the method for tile map processing provided in the embodiments of the present application, the point aggregation data and tile serial number distribution information of each level of the tile map may be first obtained, and the aggregation data distribution graph is generated based on the sequence number and the tile serial number distribution information. The aggregation data distribution graph may be used to represent the distribution of the point aggregation data in the map tiles of each level; then, the compression weight of each map tile of the level is determined based on the aggregation data distribution graph. The corresponding map tile is compressed to obtain the compressed tile map based on the compression weight. By compressing the map tiles of each level of the tile map with different compression weights based on the distribution of point aggregation data, the data volume of the map tiles may be reduced, and the compressed tile map obtained occupies less space compared to the tile map. In this way, when loading and displaying the map, the map tiles in the compressed tile map may be loaded and displayed, reducing the network transmission bandwidth pressure during the tile map display; moreover, the entire tile map processing is image-based and may be applied to any form of maps, such as standard maps and satellite maps, with strong applicability.

Based on the method for tile map processing of the corresponding embodiment in FIG. 1, after obtaining the compressed tile map, a user behavior of operating the map may be detected and tracked when using the map. Based on the user behavior of operating the map, it is determined whether to display an original map to improve the visual effect of map display. In an embodiment, the method for tile map processing provided in the embodiments of the present application may further include the following steps: in case that a map browsing operation is detected, determining an operation type of the map browsing operation and a corresponding tile sequence number; determining a map tile display format based on the operation type, and determining a target map tile corresponding to the tile sequence number based on the map tile display format; and displaying the target map tile. The map tile display format may include an original tile map or a compressed tile map. In case that the map tile display format is the original tile map, the map tile corresponding to the tile sequence number may be determined from the tile map for display, providing users with a clear map; in case that the map tile display format is a compressed tile map, the map tile corresponding to the tile sequence number may be determined from the compressed tile map for display, which may reduce the load of network transmission bandwidth and improve the speed of map loading.

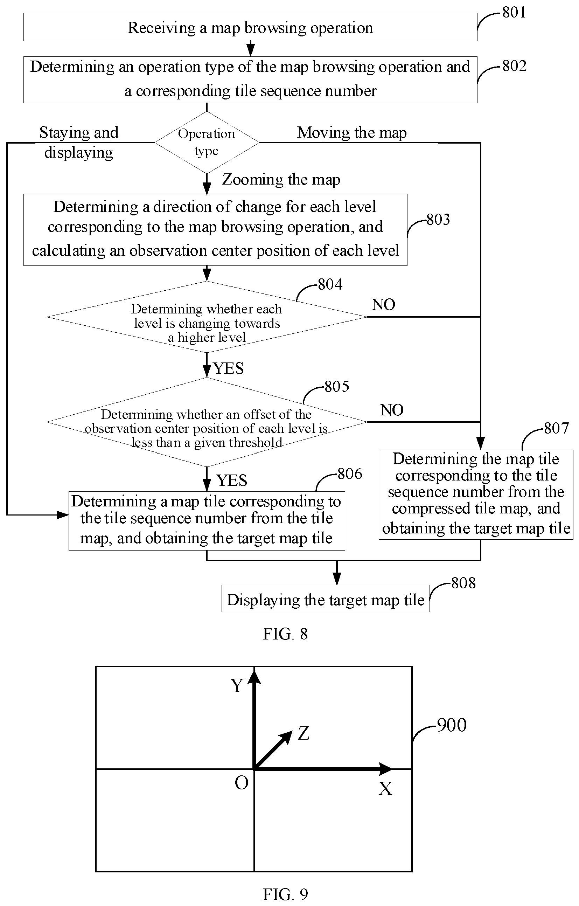

As such, FIG. 8 exemplarily illustrates a second schematic flowchart of a method for tile map processing according to an embodiment of the present application. Referring to FIG. 8, the method for tile map processing may include the following step 801 to step 808.

Step 801: receiving a map browsing operation.

An electronic device may display a map on a screen, and within a map display window, a user may perform map browsing operations such as moving, zooming, staying to search for locations and area display on the map. The electronic device may obtain a map browsing operation of the user within the map display window.

Step 802: determining an operation type of the map browsing operation and a corresponding tile sequence number.

By the map browsing operation within the map display window, the user may view map tiles of different levels and regions, with each operation corresponding to an operation type. The operation types may include, for example, at least one of staying and displaying, moving the map, or zooming the map.

For example, determining the operation type of the map browsing operation may include: obtaining a tile sequence number corresponding to the map browsing operation within a given time period; and determining the operation type of the map browsing operation based on a change in the tile sequence number within the given time period.

For example, FIG. 9 exemplarily illustrates a schematic diagram of a map movement direction coordinate system according to an embodiment of the present application. Referring to FIG. 9, a map movement direction coordinate system may be established with a center of the map display window 900 as an origin O, a direction of movement to the right of the map display window as an X-axis positive direction, a direction of movement above the map display window as a Y-axis positive direction, and a direction of level enlargement as a Z-axis positive direction.

Based on the map movement direction coordinate system shown in FIG. 9, when the user moves the map, the Z-axis coordinate does not change in the tile sequence number of the map tiles displayed in the map display window 900, while the X-axis and Y-axis coordinates change with the movement operation. This changing feature may be taken and tracked as a behavior of the user moving the map. When the user moves the map to a certain region and stays there for more than the given time period without any operation being detected on the map, the map tiles displayed in the map display window 900 remain unchanged, that is, the tile sequence number of the displayed map tiles remain unchanged. This unchanged feature may be taken and tracked as a behavior of the user staying and displaying. When the user moves the map to a certain position and zooms in the level downwards or zooms out the level upwards, the Z-axis coordinate in the tile sequence number of the map tile displayed in the map display window 900 changes. This changing feature may be taken as a behavior of the user zooming the map and tracked.

As such, the operation type of the map browsing operation may be determined based on the change in tile sequence numbers within the map display window. In an embodiment, if the Z-axis coordinate remains unchanged while the X-axis and Y-axis coordinates change, the operation type is determined to be moving the map; if the Z-axis coordinate changes and the changes in the X-axis and Y-axis coordinates are less than the set threshold, the operation type is determined to be zooming the map; if the coordinates of the X-, Y-, and Z-axes remain unchanged, then the operation type is determined to be staying and displaying.

For example, when the user operates the map, the electronic device may obtain the tile sequence number corresponding to the user map browsing operation through a packet capture tool or by setting the map to TileDebug mode.

For example, a set of at least two map tiles may be requested by the user to browse during a given time period T. As such, an observation center position may be calculated based on a set of tile sequence numbers requested by the user to browse during the given time period T. The observation center position may represent an average center of latitude and longitude browsed during the given time period T. Taking the Mercator coordinate system for example, based on the tile sequence number of the requested map tile, the latitude and longitude range requested by the user may be calculated using the following formulas (3) and (4):

$$\text{lng} = \frac{\text{tileX}}{2^z} \times 360 - 180 \qquad (3);$$

$$\text{lat} = \arctan\left(\sinh\left(\pi \times \left(1 - \frac{2 \times \text{tileY}}{2^z}\right)\right)\right) \qquad (4),$$

where z represents the level, tileX represents a tile longitude coordinate of the map tile, tileY represents a tile latitude coordinate of the map tile, z, tileX, and tileY form the tile sequence number of the map tile, lng represents longitude, and lat represents latitude.

It is assumed that tile sequence numbers requested by the user for map browsing operations within the given time period T at a same level are shown in Table 1 below:

Table 1

|  | tileX | tileY | lng | lat |
|---|---|---|---|---|
| Tile 1 | $\text{tileX}_1$ | $\text{tileY}_1$ | $\text{lng}_1$ | $\text{lat}_1$ |
| Tile 2 | $\text{tileX}_2$ | $\text{tileY}_2$ | $\text{lng}_2$ | $\text{lat}_2$ |
| ... | ... | ... | ... | ... |
| Tile n | $\text{tileX}_n$ | $\text{tileY}_n$ | $\text{lng}_n$ | $\text{lat}_n$ |

Based on Table 1, the observation center position of n map tiles within each given time period T may be calculated using the following formula (5):

$$\text{center} = \left(\sum_{i=0}^{i=n} \text{tileX}_i * n^{-1} , \quad \sum_{i=0}^{i=n} \text{tileY}_i * n^{-1}\right) \qquad (5).$$

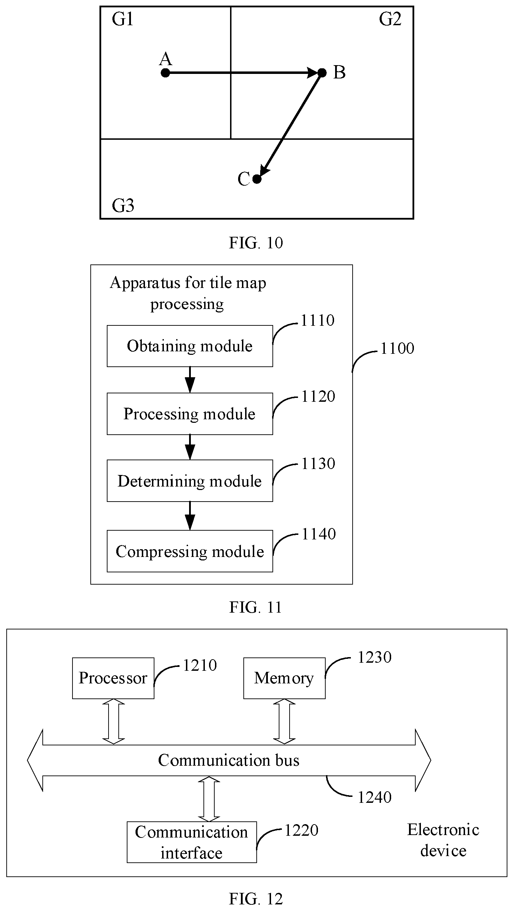

Based on the average center of each given time period T, the browsing trajectory corresponding to the user map browsing operation may be obtained. For example, FIG. 10 exemplarily illustrates a schematic diagram of browsing trajectories corresponding to map browsing operations in a same level according to an embodiment of the present application. Referring to FIG. 10, region G1 is a region loaded with forward movement along the X-axis during a first time period T, where position A represents the observation center position of the map tile browsed during the first time period T; region G2 is a region loaded with forward movement along the X-axis during a second time period T, where position B represents the observation center position of the map tiles browsed during the second time period T; region G3 is a region loaded with negative Y-axis movement during a third time period T, where position C represents the observation center position of the map tiles browsed during the third time period T. The browsing trajectory indicated by the arrows may be obtained based on the observation center positions A, B, and C.

If the Z-axis coordinate of the tile sequence numbers obtained within the given time period T remains unchanged while the X-axis and Y-axis coordinates change, and the change is greater than a resolution threshold of the current level, then the operation type is determined to be moving the map; if there is a continuous change in the Z-axis coordinate among the tile sequence numbers obtained within the given time period T, and the changes in the X-axis and Y-axis coordinates are less than the set threshold, then the operation type is determined to be zooming the map; if the coordinates of the X, Y, and Z axes in the tile sequence numbers obtained within the given time period T remain unchanged, then the operation type is determined to be staying and displaying.

After determining the operation type of the map browsing operation, the map tile display format may be determined based on the operation type, and the target map tile corresponding to the tile sequence number may be determined based on the map tile display format. In an embodiment, if the operation type is zooming the map, step 803 is performed; if the operation type is staying and displaying, the map tile display format is determined as the original tile map, and step 806 is performed; if the operation type is moving the map, the map tile display format is determined as the compressed tile map, and step 807 is performed.

Step 803: determining a direction of change for each level corresponding to the map browsing operation, and calculating an observation center position of each level.

In case that the operation type is zooming the map, the direction of change for each level may be determined based on the tile sequence number corresponding to the map browsing operation within the given time period, and according to the change in level z in the tile sequence number. The observation center position of each level corresponding to the map browsing operation may be calculated based on formula (5) above. Then, the map tile display format may be determined based on the change direction of each level and the change information of the observation center position, and the target map tile corresponding to the map tile sequence number may be determined based on the display format. In an embodiment, step 804 to step 806 as follows may be performed.

Step 804: determining whether each level is changing towards a higher level.

If each level is changing towards a higher level, step 805 is performed; otherwise, step 807 is performed. Changing towards a higher level is, for example, changing from level 11 to level 12, and then to level 13, the higher the level, the lower the resolution, and the clearer the displayed map details.

Step 805: determining whether an offset of the observation center position of each level is less than a given threshold.

In case of changing from each level to a higher level, the offset of the observation center position of each level may be determined by continuously comparing the observation center positions of each level, and the offset is compared with the given threshold. If the offset is less than the given threshold, the map tile display format is determined as the original tile map, and step 806 is performed; if the offset is greater than or equal to the given threshold, the map tile display format is determined as the compressed tile map, and step 807 is performed. The given threshold may be a threshold of a level resolution of the tile map.

Step 806: determining a map tile corresponding to the tile sequence number from the tile map, and obtaining the target map tile.

In case that the offset of the observation center position of each level is less than the given threshold, it represents that the observation center in the current map display window does not change. The user continuously performs zooming in on the map to obtain detailed information. The map tile corresponding to the tile sequence number may be obtained from the tile map as the target map tile. Step 808 is performed to provide a clear original map tile.

In case that the operation type is staying and displaying, it indicates that the user needs to browse the region of the current map tile, the map tile corresponding to the tile sequence number is obtained from the tile map as the target map tile, and then step 808 is performed to display the clear original map tile image, which may obtain better display effect, and improve user experience.

Step 807: determining the map tile corresponding to the tile sequence number from the compressed tile map, and obtaining the target map tile.

In case that the offset of the observation center position of each level is greater than or equal to the given threshold, it represents that the observation center in the current map display window has changed, and the operation of moving the map has occurred while zooming the map. The map tile corresponding to the tile sequence number may be obtained from the compressed tile map as the target map tile, and step 808 is performed to improve the loading speed of the map tile.

During the procedure of zooming the map, if each level changes towards a lower level, as the level decreases, the resolution increases and the details displayed on the map tiles become blurred. Since clear details are not required, the map tile corresponding to the tile sequence number may be obtained from the compressed tile map as the target map tile, and step 808 is performed to improve the loading speed of the map tile.

In case that the operation type is moving the map, as it only moves to the desired browsing region and does not require a clear display effect, compressed map tiles may be used for display. The map tile corresponding to the tile sequence number may be obtained from the compressed tile map as the target map tile, and step 808 is performed to improve the loading speed of the map tile.

Step 808: displaying the target map tile.

In the method for tile map processing provided in the embodiments of the present application, the user map browsing behavior may be tracked based on the user map browsing behavior, the operation type is determined, and whether to display the original map tile or the compressed map tile is determined based on the operation type. As such, based on the user map browsing behavior, clear original map tile images may be provided in a timely way when exploring map tile regions at a higher level or staying to view the required tile regions, resulting in better display effects; when moving or zooming the map towards lower levels, compressed map tiles is used for display, which may improve the loading speed of map tiles while ensuring user experience and reducing the load on network transmission bandwidth.

In the method for tile map processing provided in the embodiments of the present application, the load of network transmission bandwidth may be effectively reduced and the loading speed of map tiles is improved without improving the display technology of map tiles. The method may be compatible with both satellite maps and standard maps, with strong applicability.

A description of the apparatus for tile map processing is provided hereafter in the present application. The apparatus for tile map processing described below may be referenced to the method for tile map processing described above.

FIG. 11 exemplarily illustrates a schematic structural diagram of an apparatus for tile map processing according to an embodiment of the present application. Referring to FIG. 11, the apparatus for tile map processing 1100 may include: an obtaining module 1110, configured to obtain, for each level of a tile map, point aggregation data and tile serial number distribution information of the level; a processing module 1120, configured to determine a sequence number of a map tile where the point aggregation data are located, and generate an aggregation data distribution graph based on the tile serial number distribution information and the sequence number, where the aggregation data distribution graph represents distribution of the point aggregation data in a map tile of the level; a determining module 1130, configured to determine a compression weight of each map tile of the level based on the aggregation data distribution graph; and a compressing module 1140, configured to compress a map tile corresponding to the compression weight based on the compression weight, to obtain a compressed tile map of the tile map.

In an embodiment, the determining module 1130 may include: a first processing unit, configured to perform numerical smoothing processing on the aggregation data distribution graph based on the number of points, to obtain a numerically smoothed distribution graph; and a second processing unit, configured to perform normalization processing on the numerically smoothed distribution graph, to obtain a weight distribution graph corresponding to a corresponding level, where the weight distribution graph represents a compression weight of each map tile of the level.

In an embodiment, the compressing module 1140 may include: a first determining unit, configured to determine a compression quality factor based on the compression weight; and a compressing unit, configured to perform lossy compression on the map tile corresponding to the compression weight based on the compression quality factor.

In an embodiment, the apparatus for tile map processing 1100 may further include a displaying module. The determining module 1130 may also be configured to determine, in case that a map browsing operation is detected, an operation type of the map browsing operation and a corresponding tile sequence number, determine a map tile display format based on the operation type, determine a target map tile corresponding to the tile sequence number based on the map tile display format, and display the target map tile, where the map tile display format includes an original tile map or a compressed tile map. The displaying module is configured to display the target map tile.

In an embodiment, the determining module 1130 may include: a second determining unit, configured to determine the map tile display format as the original tile map in case that the operation type is staying and displaying, and determine a map tile corresponding to the tile sequence number from the tile map to obtain the target map tile; a third determining unit, configured to determine the map tile display format as the compressed tile map in case that the operation type is moving the map, and determine the map tile corresponding to the tile sequence number from the compressed tile map to obtain the target map tile; a fourth determining unit, configured to calculate, in case that the operation type is zooming the map, an observation center position of each level corresponding to the map browsing operation based on the tile sequence number corresponding to the map browsing operation within a given time period, determine the map tile display format based on a change direction of each level and change information of the observation center position, and determine the target map tile corresponding to the map tile sequence number based on the display format.

In an embodiment, the fourth determining unit may include: a first determining subunit, configured to determine the map tile display format as the original tile map in case that each level changes towards a higher level direction and an offset of a change of observation center position of each level is less than a given threshold, and determine a map tile corresponding to the tile sequence number from the tile map to obtain the target map tile; and a second determining subunit, configured to determine the map tile display format as the compressed tile map in case that each level changes towards a lower level direction and the offset of the change of observation center position of each level is equal to or greater than a given threshold, and determine the map tile corresponding to the tile sequence number from the compressed tile map to obtain the target map tile.

In an embodiment, the determining module 1130 may include: an obtaining unit, configured to obtain a tile sequence number corresponding to the map browsing operation within a given time period; and a fifth determining unit, configured to determine the operation type of the map browsing operation based on a change in the tile sequence number within the given time period.

FIG. 12 illustrates a schematic structural diagram of an electronic device, which may include as shown in FIG. 12: a processor 1210, a communication interface 1220, a memory 1230, and a communication bus 1240, among which the processor 1210, the communication interface 1220, and the memory 1230 may communicate with each other through the communication bus 1240. The processor 1210 may call logical instructions in the memory 1230 to perform a method for tile map processing provided in each of the above method embodiments, which may include, for example: obtaining, for each level of a tile map, point aggregation data and tile serial number distribution information of the level; determining a sequence number of a map tile where the point aggregation data are located, and generate an aggregation data distribution graph based on the tile serial number distribution information and the sequence number, where the aggregation data distribution graph represents distribution of the point aggregation data in a map tile of the level; determining a compression weight of each map tile of the level based on the aggregation data distribution graph; and compressing a map tile corresponding to the compression weight based on the compression weight, to obtain a compressed tile map of the tile map.

In addition, the logical instructions in the above-mentioned memory 1230 may be implemented in the form of software functional unit and stored in a computer-readable storage medium when sold or used as an independent product. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a flash disk, a mobile hard disk, a read-only memory (ROM), a random access memory (RAM), a magnetic disk, or a compact disk.

The present application further provides a computer program product including a computer program that may be stored on a non-transient computer-readable storage medium. When the computer program is executed by a processor, the computer may perform the above method for tile map processing provided in each of the above method embodiments, which may include, for example: obtaining, for each level of a tile map, point aggregation data and tile serial number distribution information of the level; determining a sequence number of a map tile where the point aggregation data are located, and generate an aggregation data distribution graph based on the tile serial number distribution information and the sequence number, where the aggregation data distribution graph represents distribution of the point aggregation data in a map tile of the level; determining a compression weight of each map tile of the level based on the aggregation data distribution graph; and compressing a map tile corresponding to the compression weight based on the compression weight, to obtain a compressed tile map of the tile map.

The present application further provides a non-transient computer-readable storage medium on which a computer program is stored. When executed by a processor, the computer program implements the method for tile map processing provided in each of the above method embodiments, which may include, for example: obtaining, for each level of a tile map, point aggregation data and tile serial number distribution information of the level; determining a sequence number of a map tile where the point aggregation data are located, and generate an aggregation data distribution graph based on the tile serial number distribution information and the sequence number, where the aggregation data distribution graph represents distribution of the point aggregation data in a map tile of the level; determining a compression weight of each map tile of the level based on the aggregation data distribution graph; and compressing a map tile corresponding to the compression weight based on the compression weight, to obtain a compressed tile map of the tile map.

The apparatus embodiments described above are only schematic, where the units described as separate components may be or may not be physically separated, and the components displayed as units may be or may not be physical units, that is, they may be located in one place or distributed across a plurality of network units. Some or all modules may be selected according to actual needs to achieve the purpose of this embodiment. Those skilled in the art may understand and implement them without creative labor.

**EP 4 625 205 A1**

Through the description of the above implementations, those skilled in the art may clearly understand that each implementation may be achieved through software and necessary universal hardware platforms, and it may also of course be achieved through hardware. Based on such understanding, the solutions mentioned above, or the parts that contribute to related art, may be embodied in the form of software product, which may be stored in computer-readable storage media such as ROM/RAM, magnetic disks, optical disks, etc., including several instructions to enable a computer device (which may be a personal computer, a server, or a network device, etc.) to perform the methods described in various embodiments or certain parts of the embodiments.

Finally, it should be noted that the above embodiments are only used to illustrate the solutions of the present application, and not to limit them; although the present application has been described in detail with reference to the aforementioned embodiments, those skilled in the art should understand that they may still modify the solutions described in each of the aforementioned embodiments, or replace some of the features equally; these modifications or substitutions do not deviate the essence of the corresponding solutions from the scope of the solutions of the various embodiments of the present application.

**Claims**

1.  A method for tile map processing, comprising:

    obtaining, for each level of a tile map, point aggregation data and tile serial number distribution information of the level;
    determining a sequence number of a map tile where the point aggregation data are located, and generating an aggregation data distribution graph based on the tile serial number distribution information and the sequence number, wherein the aggregation data distribution graph represents distribution of the point aggregation data in a map tile of the level;
    determining a compression weight of each map tile of the level based on the aggregation data distribution graph; and
    compressing a map tile corresponding to the compression weight based on the compression weight, to obtain a compressed tile map of the tile map.

2.  The method of claim 1, wherein determining the compression weight of each map tile of the level based on the aggregation data distribution graph comprises:

    performing numerical smoothing processing on the aggregation data distribution graph based on a number of points, to obtain a numerically smoothed distribution graph; and
    performing normalization processing on the numerically smoothed distribution graph, to obtain a weight distribution graph corresponding to the level, wherein the weight distribution graph represents a compression weight of each map tile of the level.

3.  The method of claim 1, wherein compressing the map tile corresponding to the compression weight based on the compression weight comprises:

    determining a compression quality factor based on the compression weight; and
    performing lossy compression on the map tile corresponding to the compression weight based on the compression quality factor.

4.  The method of any of claims 1 to 3, further comprising:

    determining, in case that a map browsing operation is detected, an operation type of the map browsing operation and a corresponding tile sequence number;
    determining a map tile display format based on the operation type, and determining a target map tile corresponding to the tile sequence number based on the map tile display format, wherein the map tile display format comprises an original tile map or a compressed tile map; and
    displaying the target map tile.

5.  The method of claim 4, wherein determining the map tile display format based on the operation type, and determining the target map tile corresponding to the tile sequence number based on the map tile display format comprises:

determining the map tile display format as the original tile map in case that the operation type is staying and displaying, and determining a map tile corresponding to the tile sequence number from the tile map to obtain the target map tile;

determining the map tile display format as the compressed tile map in case that the operation type is moving a map, and determining the map tile corresponding to the tile sequence number from the compressed tile map to obtain the target map tile; and

calculating, in case that the operation type is zooming the map, an observation center position of each level corresponding to the map browsing operation based on the tile sequence number corresponding to the map browsing operation within a given time period, determining the map tile display format based on a change direction of each level and change information of the observation center position, and determining the target map tile corresponding to the map tile sequence number based on the display format.

6. The method of claim 5, wherein determining the map tile display format based on the change direction of each level and change information of the observation center position, and determining the target map tile corresponding to the map tile sequence number based on the display format comprises:

determining the map tile display format as the original tile map in case that each level changes towards a higher level direction and an offset of a change of observation center position of each level is less than a given threshold, and determining a map tile corresponding to the tile sequence number from the tile map to obtain the target map tile; and

determining the map tile display format as the compressed tile map in case that each level changes towards a lower level direction and the offset of the change of observation center position of each level is equal to or greater than the given threshold, and determining the map tile corresponding to the tile sequence number from the compressed tile map to obtain the target map tile.

7. The method of claim 4, wherein determining the operation type of the map browsing operation comprises:

obtaining the tile sequence number corresponding to the map browsing operation within a given time period; and

determining the operation type of the map browsing operation based on a change in tile sequence number within the given time period.

8. An apparatus for tile map processing, comprising:

an obtaining module, configured to obtain, for each level of a tile map, point aggregation data and tile serial number distribution information of the level;

a processing module, configured to determine a sequence number of a map tile where the point aggregation data are located, and generate an aggregation data distribution graph based on the tile serial number distribution information and the sequence number, wherein the aggregation data distribution graph represents distribution of the point aggregation data in a map tile of the level;

a determining module, configured to determine a compression weight of each map tile of the level based on the aggregation data distribution graph; and

a compressing module, configured to compress a map tile corresponding to the compression weight based on the compression weight, to obtain a compressed tile map of the tile map.

9. An electronic device, comprising a memory, a processor, and a computer program stored on the memory and executable on the processor, wherein the processor, when executing the computer program, performs the method of any of claims 1 to 7.

10. A non-transient computer-readable storage medium storing a computer program, wherein the computer program, when executed by a processor, performs the method of any of claims 1 to 7.

Obtaining, for each level of a tile map, point aggregation data and tile serial number distribution information of the level ⌐110

Determining a sequence number of a map tile where the point aggregation data are located, and generating an aggregation data distribution graph based on the sequence number and the tile serial number distribution information ⌐120

Determining a compression weight of each map tile of the level based on the aggregation data distribution graph ⌐130

Compressing a map tile corresponding to the compression weight based on the compression weight, to obtain a compressed tile map of the tile map ⌐140

FIG. 1

FIG. 2

| （z1，x1，y1） | （z1，x2，y1） | （z1，x3，y1） | （z1，x4，y1） | （z1，x5，y1） |
|---|---|---|---|---|
| （z1，x1，y2） | （z1，x2，y2） | （z1，x3，y2） | （z1，x4，y2） | （z1，x5，y2） |
| （z1，x1，y3） | （z1，x2，y3） | （z1，x3，y3） | （z1，x4，y3） | （z1，x5，y3） |
| （z1，x1，y4） | （z1，x2，y4） | （z1，x3，y4） | （z1，x4，y4） | （z1，x5，y4） |

FIG. 3

| （z1，x1，y1） | （z1，x2，y1） | （z1，x3，y1） ③ | （z1，x4，y1） | （z1，x5，y1） ① |
|---|---|---|---|---|
| （z1，x1，y2） | （z1，x2，y2） | （z1，x3，y2） 1199 | （z1，x4，y2） 785 | （z1，x5，y2） |
| （z1，x1，y3） 11 | （z1，x2，y3） 55 | （z1，x3，y3） 166 | （z1，x4，y3） 284 | （z1，x5，y3） |
| （z1，x1，y4） | （z1，x2，y4） | （z1，x3，y4） | （z1，x4，y4） | （z1，x5，y4） |

FIG. 4

| （z1，x1，y1） | （z1，x2，y1） | （z1，x3，y1） | （z1，x4，y1） | （z1，x5，y1） |
|---|---|---|---|---|
| 716 | 956 | 962 | 956 | 717 |
| （z1，x1，y2） | （z1，x2，y2） | （z1，x3，y2） | （z1，x4，y2） | （z1，x5，y2） |
| 716 | 956 | 2233 | 2104 | 716 |
| （z1，x1，y3） | （z1，x2，y3） | （z1，x3，y3） | （z1，x4，y3） | （z1，x5，y3） |
| 730 | 1147 | 2024 | 1376 | 716 |
| （z1，x1，y4） | （z1，x2，y4） | （z1，x3，y4） | （z1，x4，y4） | （z1，x5，y4） |
| 716 | 716 | 716 | 716 | 716 |

FIG. 5

FIG. 6

| （z1，x1，y1）<br>0.75 | （z1，x2，y1）<br>0.78 | （z1，x3，y1）<br>0.78 | （z1，x4，y1）<br>0.78 | （z1，x5，y1）<br>0.75 |
|---|---|---|---|---|
| （z1，x1，y2）<br>0.75 | （z1，x2，y2）<br>0.78 | （z1，x3，y2）<br>1 | （z1，x4，y2）<br>0.95 | （z1，x5，y2）<br>0.75 |
| （z1，x1，y3）<br>0.75 | （z1，x2，y3）<br>0.8 | （z1，x3，y3）<br>0.9 | （z1，x4，y3）<br>0.86 | （z1，x5，y3）<br>0.75 |
| （z1，x1，y4）<br>0.75 | （z1，x2，y4）<br>0.75 | （z1，x3，y4）<br>0.75 | （z1，x4，y4）<br>0.75 | （z1，x5，y4）<br>0.75 |

FIG. 7

Receiving a map browsing operation ⎯801

Determining an operation type of the map browsing operation and ⎯802
a corresponding tile sequence number

Staying and      Operation      Moving the map
displaying      type

Zooming the map

Determining a direction of change for each level
corresponding to the map browsing operation, and ⎯803
calculating an observation center position of each level

Determining whether each      804      NO
level is changing towards
a higher level

YES

Determining whether an offset of the      805      NO      807
observation center position of each level is
less than a given threshold

Determining the map tile
corresponding to the tile
sequence number from the
compressed tile map, and
obtaining the target map tile

YES      806

Determining a map tile corresponding to
the tile sequence number from the tile
map, and obtaining the target map tile

Displaying the target map tile ⎯808

FIG. 8

FIG. 9

FIG. 10

FIG. 11

FIG. 12

## INTERNATIONAL SEARCH REPORT

| | International application No. |
|---|---|
| | **PCT/CN2023/104618** |

| A. | CLASSIFICATION OF SUBJECT MATTER |
|---|---|
| | G06F 16/51(2019.01)i; G06F 16/587(2019.01)i; G06F 16/29(2019.01)i |

According to International Patent Classification (IPC) or to both national classification and IPC

| B. | FIELDS SEARCHED |
|---|---|

Minimum documentation searched (classification system followed by classification symbols)
   IPC: G06F

Documentation searched other than minimum documentation to the extent that such documents are included in the fields searched

Electronic data base consulted during the international search (name of data base and, where practicable, search terms used)
   VEN, CNTXT, WOTXT, EPTXT, USTXT, CNKI, IEEE: 地图, 瓦片, 压缩, 点位, 数据, 聚合, 序列号, 层级, 权重, 权值, map, tile, compression, level, data, aggregation, distribution, weight, point, serial number

| C. | DOCUMENTS CONSIDERED TO BE RELEVANT | |
|---|---|---|
| Category* | Citation of document, with indication, where appropriate, of the relevant passages | Relevant to claim No. |
| A | CN 110866132 A (INSPUR SOFTWARE CO., LTD.) 06 March 2020 (2020-03-06) description, paragraphs [0032]-[0044] | 1-10 |
| A | CN 108664619 A (JIANGXI UNIVERSITY OF SCIENCE AND TECHNOLOGY) 16 October 2018 (2018-10-16) entire document | 1-10 |
| A | CN 111090712 A (CHINA INTELLIGENT AND CONNECTED VEHICLES (BEIJING) RESEARCH INSTITUTE CO., LTD.) 01 May 2020 (2020-05-01) entire document | 1-10 |
| A | CN 111753041 A (CHONGQING UNISINSIGHT TECHNOLOGY CO., LTD.) 09 October 2020 (2020-10-09) entire document | 1-10 |
| A | CN 114064836 A (CHONGQING BAOTU TECHNOLOGY DEVELOPMENT CO., LTD.) 18 February 2022 (2022-02-18) entire document | 1-10 |
| A | US 2020393567 A1 (DEEPMAP INC.) 17 December 2020 (2020-12-17) entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2023** | **12 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104618**

| Patent document cited in search report | | | Publication date (day/month/year) | Patent family member(s) | | | Publication date (day/month/year) |
|---|---|---|---|---|---|---|---|
| CN | 110866132 | A | 06 March 2020 | None | | | |
| CN | 108664619 | A | 16 October 2018 | None | | | |
| CN | 111090712 | A | 01 May 2020 | None | | | |
| CN | 111753041 | A | 09 October 2020 | None | | | |
| CN | 114064836 | A | 18 February 2022 | None | | | |
| US | 2020393567 | A1 | 17 December 2020 | US | 2023043182 | A1 | 09 February 2023 |
| | | | | WO | 2020257364 | A1 | 24 December 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211494398X